# EUROPEAN PATENT APPLICATION

(11) **EP 2 503 738 A1**
(43) Date of publication of application: **26.09.2012**
(21) Application number: 10831609.2
(22) Date of filing: 18.11.2010
(51) Int. Cl.: H04L 12/46, H04L 12/44, H04L 12/56, H04L 29/14

(54) **RELAY DEVICE, RELAY METHOD, AND PROGRAM**

(30) Priority: 18.11.2009 JP 2009263037
(71) Applicant: NEC Corporation, Tokyo 108-8001 (JP)
(72) Inventor: SONOBE Satoshi, Tokyo 108-8001 (JP)
(74) Representative: Betten & Resch
(86) International application number: PCT/JP2010/070554
(87) International publication number: WO 2011/062216

(57) **Abstract**

A packet received by a first or second relay apparatus from a first switching device is distributed to the first relay apparatus and the second relay apparatus. The first relay apparatus transmits the distributed packet to a third relay apparatus. The second relay apparatus transmits the distributed packet to a fourth relay apparatus. Next, the third relay apparatus and the fourth relay apparatus transfer the packet received from the first or second relay apparatus to either the third or fourth relay apparatus, and the relay apparatus that receives the pertinent transferred packet transmits the transferred packet to a second switching device.

## Description

### TECHNICAL FIELD

The present invention relates to a relay apparatus which relays communications between two communication devices, and to a relay method and program.
Priority is claimed on Japanese Patent Application No. 2009-263037, filed November 18, 2009, the content of which is incorporated herein by reference.

### BACKGROUND ART

Heretofore, a technology referred to as link aggregation has been proposed for enhancing communication speed and failure resistance by multiplexing a plurality of physical communication lines, and treating them as one logical communication line. LACP (Link Aggregation Control Protocol), which is a protocol of link aggregation for wired lines, has been standardized by IEEE802.3ad. According to LACP, with respect to, for example, communication between two switching devices connected by multiple communication lines, the packets transmitted and received between the pertinent switching devices are subjected to load balancing by an algorithm such as round-robin, and transmitted by respectively different communication lines. In the case where a malfunction such as a short-circuit occurs in one of the multiple communication lines, communications can be continued by having the switching devices conduct switching so that packets to be transmitted via the communication line on which the malfunction has occurred are transmitted via another communication line.

However, as LACP which is standardized by IEEE802.3ad is link aggregation technology which is applied to communications between two devices which are directly connected, there is the problem that, for example, LACP cannot be applied to communications between devices connected via multiple terminals or networking mechanisms, such as systems which provide a relay apparatus for each of the multiple communication lines connecting two devices.
As a technology solving this problem, Patent Document 1 discloses a technology wherein link aggregation is achieved in systems constructed with multiple terminals or networking mechanisms. According to the technology described in Patent Document 1, with respect to, for example, a relay apparatus in a system constructed with multiple terminals or networking mechanisms, the communication lines connecting a transmitting-side switching device and a subject device, and the communication lines connecting a subject device and a receiving-side switching device are correspondingly stored in the same groups. In the case where a malfunction occurs in any of the communication lines, prompting occurs so that all of the communication lines belonging to the same group as the communication line on which the malfunction has occurred are interrupted, and another communication line which is free of malfunction relative to the transmitting-side switching device is used.

### PRIOR ART REFERENCES

### PATENT DOCUMENTS

Patent Document 1: Japanese Unexamined Patent Application, First Publication No. 2002-026909

### DISCLOSURE OF THE INVENTION

However, in the case where the technology described in Patent Document 1 is used, when a malfunction occurs in any of the communication lines belonging to the same group, as all of the pertinent communication lines belonging to the pertinent group are interrupted, the normally functioning communication lines cannot be utilized, and there is the possibility that a waste of communication resources may occur.
With respect to such prior art, it would be desirable to have a communication system, a communication method, a relay apparatus, and a program which efficiently multiplex communication lines using normally functioning communication lines.

The present invention has, for example, the following aspects. For example, a first aspect is a relay apparatus which relays packet communications of a first communication device and a second communication device, including: a first receiver which receives a packet from the aforementioned first communication device; a receiving line determination unit which determines via which communication line, among communication lines connecting the aforementioned first communication device and the respective relay apparatuses, to transmit a packet received from the aforementioned first communication device to the aforementioned second communication device; a distribution unit which distributes a packet received by the aforementioned first receiver to a subject device and another relay apparatus, in the case where the aforementioned receiving line determination unit determines that a packet received from the aforementioned first communication device is to be transmitted to the aforementioned second communication device via a communication line connected to a subject device; an acquisition unit which obtains a packet distributed by another relay apparatus, in the case where the aforementioned receiving line determination unit determines that a packet received from the aforementioned first communication device is to be transmitted to the aforementioned second communication device via a communication line connected to the aforementioned other relay apparatus; a first transmitter which transmits a packet distributed to a subject device by the aforementioned distributor, or a packet obtained by the aforementioned acquisition unit to the aforementioned second communication device; a second receiver which receives a packet from the aforementioned second communication device; a transmitting line determination unit which determines via which communication line, among communication lines connecting the aforementioned first communication device and the respective relay apparatuses, to transmit a packet to the aforementioned first communication device; a transfer unit which transfers a packet received by the aforementioned second receiver to another relay apparatus, in the case where the aforementioned transmitting line determination unit determines that a packet is to be transmitted to the aforementioned first communication device via a communication line connected to the pertinent other relay apparatus; and a second transmitter which transmits a packet received by the aforementioned second receiver and a packet transferred from another relay apparatus to the aforementioned first communication device, in the case where the aforementioned transmitting line determination unit determines that a packet is to be transmitted to the aforementioned first communication device via communication lines connected to a subject device.

A second aspect is a relay apparatus which receives packets from a first communication device, and which transmits the pertinent packets to a second communication device, including: a receiver which receives a packet from the aforementioned first communication device; a receiving line determination unit which determines via which communication circuit, among communication circuits connecting the aforementioned first communication device and the respective relay apparatuses, to transmit a packet received from the aforementioned first communication device to the aforementioned second communication device; a distribution unit which distributes a packet received by the aforementioned receiver to a subject device and another relay apparatus, in the case where the aforementioned receiving line determination unit determines that a packet received from the aforementioned first communication device is to be transmitted to the aforementioned second communication device via a communication line connected to a subject device; an acquisition unit which obtains a packet distributed by another relay apparatus, in the case where the aforementioned receiving line determination unit determines that a packet received from the aforementioned first communication device is to be transmitted to the aforementioned second communication device via a communication line connected to the aforementioned other relay apparatus; and a transmitter which transmits a packet distributed to a subject device by the aforementioned distribution unit or a packet obtained by the aforementioned acquisition unit to the aforementioned second communication device.

A third aspect is a relay method using relay apparatuses which receive packets from a first communication device, and which transmit the pertinent packets to a second communication device, wherein: a receiver receives a packet from the aforementioned first communication device; a receiving line determination unit determines via which communication line, among communication lines connecting the aforementioned first communication device and the respective relay apparatuses, to transmit a packet received from the aforementioned first communication device to the aforementioned second communication device; a distribution unit distributes a packet received by the aforementioned receiver to a subject device and another relay apparatus, in the case where the aforementioned receiving line determination unit determines that a packet received from the aforementioned first communication device is to be transmitted to the aforementioned second communication device via a communication line connected to a subject device; an acquisition unit obtains a packet distributed by another relay apparatus, in the case where the aforementioned receiving line determination unit determines that a packet received from the aforementioned first communication device is to be transmitted to the aforementioned second communication device via a communication line connected to the aforementioned other relay apparatus; and a transmitter transmits a packet distributed to a subject device by the aforementioned distribution unit or a packet obtained by the aforementioned acquisition unit to the aforementioned second communication device.

A fourth aspect is a program for causing the functions of: a receiver which receives a packet from a first communication device through a relay apparatus that receives a packet from the aforementioned first communication device, and that transmits the pertinent packet to a second communication device; a receiving line determination unit which determines via which communication line, among communication lines connecting the aforementioned first communication device and the respective relay apparatuses, to transmit a packet received from the aforementioned first communication device to the aforementioned second communication device; a distribution unit which distributes a packet received from the aforementioned receiver to a subject device and another relay apparatus, in the case where the aforementioned receiving line determination unit determines that a packet received from the aforementioned first communication device is to be transmitted to the aforementioned second communication device via a communication line connected to a subject device; an acquisition unit which obtains a packet distributed by another relay apparatus, in the case where the aforementioned receiving line determination unit determines that a packet received from the aforementioned first communication device is to be transmitted to the aforementioned second communication device via a communication line connected to the aforementioned other relay apparatus; and a transmitter which transmits a packet distributed to a subject device by the aforementioned distribution unit or a packet obtained by the aforementioned acquisition unit to the aforementioned second communication device.

A fifth aspect is a relay apparatus which receives packets from a second communication device, and which transmits the pertinent packets to a first communication device, including: a receiver which receives a packet from the aforementioned second communication device; a transmitting line determination unit which determines via which communication line, among communication lines connecting the aforementioned first communication device and the respective relay apparatuses, to transmit a packet to the first communication device; a transfer unit which transfers a packet received by the aforementioned receiver to another relay apparatus, in the case where the aforementioned transmitting line determination unit determines that a packet is to be transmitted to the aforementioned first communication device via a communication line connected to the pertinent other relay apparatus; and a transmitter which transmits a packet received by the aforementioned receiver and a packet transferred from another relay apparatus to the aforementioned first communication device, in the case where the aforementioned transmitting line determination unit determines that a packet is to be transmitted to the aforementioned first communication device via a communication line connected to a subject device.

A sixth aspect is a relay method which uses relay apparatuses that receive packets from a second communication device, and that transmit the pertinent packets to a first communication device, wherein: a receiver receives a packet from the aforementioned second communication device; a transmitting line determination unit determines via which communication line, among communication lines connecting the aforementioned first communication device and the respective relay apparatuses, to transmit a packet to the first communication device; a transfer unit transfers a packet received by the aforementioned receiver to another relay apparatus, in the case where the aforementioned transmitting line determination unit determines that a packet is to be transmitted to the aforementioned first communication device via a communication line connected to the pertinent other relay apparatus; and a transmitter transmits a packet received by the aforementioned receiver and a packet transferred from another relay apparatus to the aforementioned first communication device, in the case where the aforementioned transmitting line determination unit determines that a packet is to be transmitted to the aforementioned first communication device via a communication line connected to a subject device.

A seventh aspect is a program for causing the functions of: a receiver which receives a packet from a second communication device through a relay apparatus that receives a packet from the aforementioned second communication device, and that transmits the pertinent packet to a first communication device; a transmitting line determination unit which determines via which communication line, among communication lines connecting the aforementioned first communication device and the respective relay apparatuses, to transmit a packet to the first communication device; a transfer unit which transfers a packet received by the aforementioned receiver to another relay apparatus, in the case where the aforementioned transmitting line determination unit determines that a packet is to be transmitted to the aforementioned first communication device via a communication line connected to the pertinent other relay apparatus; and a transmitter which transmits a packet received by the aforementioned receiver and a packet transferred from another relay apparatus to the aforementioned first communication device, in the case where the aforementioned transmitting line determination unit determines that a packet is to be transmitted to the aforementioned first communication device via a communication line connected to a subject device.

According to the foregoing aspects, a given relay apparatus distributes packets received from a first communication device to a subject device and other relay apparatuses, and the packets respectively distributed by all the relay apparatuses are transmitted to a second communication device. A relay apparatus transfers a packet received from a second communication device to a given relay apparatus, and the packet transferred by the pertinent relay apparatus is transmitted to a first communication device. By this means, even if a malfunction occurs in one of the communication lines, a packet can be shared with all the relay apparatuses by the distribution unit and the transfer unit. Consequently, the relay apparatuses can efficiently multiplex communication lines using the normally functioning communication lines.

### BRIEF DESCRIPTION OF THE DRAWINGS

Fig. 1 is a schematic block diagram which shows the configuration of a communication system in one embodiment.
Fig. 2 is a schematic block diagram which shows the configuration of a relay apparatus of a first embodiment.
Fig. 3 is a first flowchart which shows operations of a relay apparatus.
Fig. 4 is a second flowchart which shows operations of a relay apparatus.
Fig. 5 is a third flowchart which shows operations of a relay apparatus.
Fig. 6 is a schematic block diagram which shows the configuration of a relay apparatus of a second embodiment.
Fig. 7 is a schematic block diagram which shows the configuration of a relay apparatus of a third embodiment.

### BEST MODE FOR CARRYING OUT THE INVENTION

### First embodiment

A first embodiment is described below in detail with reference to drawings.

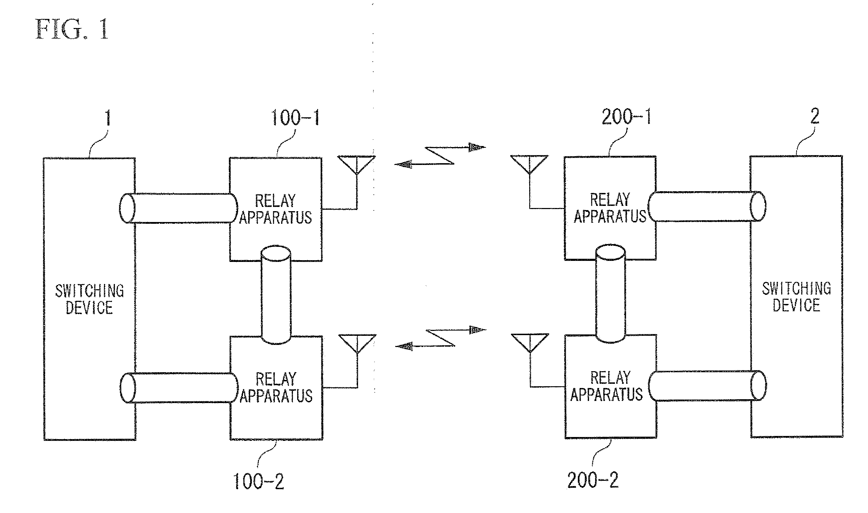

Fig. 1 is a schematic block diagram which shows the configuration of a communication system in one embodiment.
The communication system of the present embodiment is provided with a switching device 1 (a first communication device), relay apparatuses 100-1 and 100-2, a switching device 2 (a second communication device), and relay apparatuses 200-1 and 200-2. Communications between the switching device 1 and the switching device 2 are conducted via the relay apparatuses 100-1, 100-2, 200-1, and 200-2.

The switching device 1 is connected by wiring to each of the relay apparatuses 100-1 and 100-2, and an identical packet is transmitted to the respective relay apparatuses. The switching device 1 receives the packet from either of the relay apparatuses 100-1 and 100-2.
The switching device 2 is connected by wiring to each of the relay apparatuses 200-1 and 200-2, and an identical packet is transmitted to the respective relay apparatuses. The switching device 2 receives the packet from either of the relay apparatuses 200-1 and 200-2.

Each of the relay apparatuses 100-1, 100-2, 200-1 and 200-2 receives and transmits packets with the switching devices that are connected by wiring, and wirelessly receives and transmits packets with the relay apparatuses that are wireless counterparts. In the present embodiment, relay apparatus 100-1 and relay apparatus 200-1 are wireless counterparts, and relay apparatus 100-2 and relay apparatus 200-2 are wireless counterparts.
The mated relay apparatuses connected to the same switching device are respectively stack-connected; packets received from the switching device are distributed to the relay apparatuses connected to the same switching device, and packets received from a relay apparatus that is a wireless counterpart arc transferred to the relay apparatus connected to the same switching device.

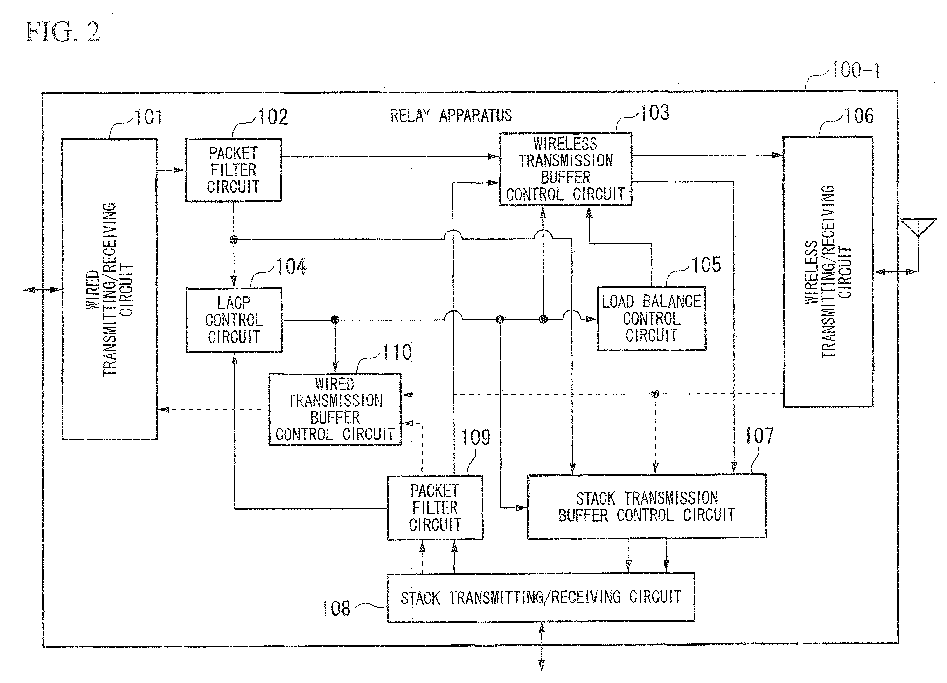

Fig. 2 is a schematic block diagram which shows the configuration of a relay apparatus of the first embodiment.
The functions and configuration of a relay apparatus are described below with relay apparatus 100-1 serving as the example, but relay apparatuses 100-2, 200-1, and 200-2 also have the same functions and configuration as relay apparatus 100-1. In Fig. 2, the arrow marks with solid lines show the flow of packets received from the switching device 1, while the arrow marks with dotted lines show the flow of packets transmitted to the switching device 1.
The relay apparatus 100-1 is provided with a wired transmitting/receiving circuit 101 (a first receiver and a second transmitter), a packet filter circuit 102, a wireless transmission buffer control circuit 103 (a distributor), an LACP control circuit 104 (a line determination unit), a load balance control circuit 105, a wireless transmitting/receiving circuit 106 (a first transmitter and a second receiver), a stack transmission buffer control circuit 107, a stack transmitting/receiving circuit 108 (an acquisition unit and a transfer unit), a packet filter circuit 109, and a wired transmission buffer control circuit 110.

The wired transmitting/receiving circuit 101 receives LACP packets and payload packets addressed to the switching device 2 from the switching device 1, and outputs the pertinent packets to the packet filter circuit 102. Here, an LACP packet is a packet which monitors the connection status of the switching device 1 and the relay apparatuses 100-1 and 100-2; the priority of address and transmission source ports, as well as address port numbers and so on are stored therein. Moreover, the wired transmitting/receiving circuit 101 transmits payload packets which are inputted from the wired transmission buffer control circuit 110 and which are addressed to the switching device 1 to the switching device 1.
Among the packets inputted from the wired transmitting/receiving circuit 101, the packet filter circuit 102 outputs the payload packets to the wireless transmission buffer control circuit 103, and outputs the LACP packets to the LACP control circuit 104 and the stack transmission buffer control circuit 107.

The wireless transmission buffer control circuit 103 records the payload packets inputted from the packet filter circuits 102 and 109 in a wireless transmission buffer provided within the subject circuit. Based on load balance signals which show the ratio of payload packets which are inputted from the load balance control circuit 105 and which are distributed to the relay apparatus 100-2, the payload packets are extracted from the wireless transmission buffer, and are outputted to the wireless transmitting/receiving circuit 106 and the stack transmission buffer control circuit 107. In the present Description, "extract" indicates that a packet stored by a buffer is read out, and that the pertinent packet is deleted from the buffer.

Based on the LACP packets inputted from the packet filter circuits 102-109, the LACP control circuit 104 discriminates the line status of the lines connecting the switching device 1 and the respective relay apparatuses 100-1 and 100-2, generates a line selection signal which indicates via which line to transmit the received packet to the relay apparatus which is the wireless counterpart, and conducts output to the wireless transmission buffer control circuit 103, the load balance control circuit 105, the stack transmission buffer control circuit 107, and the wired transmission buffer control circuit 110.

Based on the line selection signals inputted from the LACP control circuit 104, the load balance control circuit 105 determines the ratio of the payload packets distributed to the subject device and the relay apparatus 100-2, and outputs load balance signals indicating the pertinent ratio to the wireless transmission buffer control circuit 103.
The wireless transmitting/receiving circuit 106 wirelessly transmits payload packets addressed to the switching device 2 which are inputted from the wireless transmission buffer control circuit 103 to a relay apparatus that is a wireless counterpart. In addition, the wireless transmitting/receiving circuit 106 receives payload packets addressed to the switching device 1 from a relay apparatus that is a wireless counterpart, and conducts output to the stack transmission buffer control circuit 107 and wired transmission buffer control circuit 110.

The stack transmission buffer control circuit 107 inputs LACP packets from the packet filter circuit 102, inputs payload packets addressed to the switching device 2 from the wireless transmission buffer control circuit 103, inputs line selection signals from the LACP control circuit 104, and inputs payload packets addressed to the switching device 1 from the wireless transmitting/receiving circuit 106. It then records these packets in a stack transmission buffer provided in the subject circuit.
The stack transmitting/receiving circuit 108 extracts packets from the stack transmission buffer control circuit 107, and transmits the pertinent packets to the relay apparatus 100-2. In addition, the stack transmitting/receiving circuit 108 receives packets from the relay apparatus 100-2, and outputs the pertinent packets to the packet filter circuit 109.

Among the packets inputted from the stack transmitting/receiving circuit 108, the packet filter circuit 109 outputs the payload packets addressed to the switching device 2 to the wireless transmission buffer control circuit 103, outputs the LACP packets to the LACP control circuit 104 and the stack transmission buffer control circuit 107, and outputs the payload packets addressed to the switching device 1 to the wired transmission buffer control circuit 110.
The wired transmission buffer control circuit 110 records the payload packets addressed to the switching device 1 inputted from the wireless transmitting/receiving circuit 106 and the packet filter circuit 109 in a wired transmission buffer provided in the subject device. The wired transmission buffer control circuit 110 extracts the payload packets from the wired transmission buffer control circuit 110 in the case where a line selection signal inputted from the LACP control circuit 104 indicates a line that connects the subject device and the switching device 1, and conducts output to the wired transmitting/receiving circuit 101.

The wired transmitting/receiving circuit 101 of the relay apparatus 100-1 then receives the packets from the switching device 1, and the LACP control circuit 104 determines, from among the communication lines connecting the switching device 1 and the relay apparatuses 100-1 and 100-2, via which communication line to transmit the received packets to the switching device 2, and via which communication line to transmit the packets to the first communication device.
When the LACP control circuit 104 determines that a packet received from the switching device 1 is to be transmitted to the switching device 2 via a communication line connected to the subject device, the wireless transmission buffer control circuit 103 distributes the packet received by the wired transmitting/receiving circuit 101 to the subject device and the relay apparatus 100-2. On the other hand, when the LACP control circuit 104 determines that a packet received from the switching device 1 is to be transmitted to the switching device 2 via a communication line connected to the relay apparatus 100-2, the stack transmitting/receiving circuit 108 acquires the packet that is distributed by the relay apparatus 100-2.
Subsequently, the wireless transmitting/receiving circuit 106 transmits the packet distributed to the subject device by the wireless transmission buffer control circuit 103, or the packet acquired by the stack transmitting/receiving circuit 108 to the switching device 2.

The wireless transmitting/receiving circuit 106 receives packets from the switching device 2 via the relay apparatus 200-1. In the case where the LACP control circuit 104 determines that the packets are to be transmitted to the switching device 1 via a communication line connected to the relay apparatus 100-2, the stack transmitting/receiving circuit 108 transfers the packets received by the wireless transmitting/receiving circuit 106 to the relay apparatus 100-2. On the other hand, in the case where the LACP control circuit 104 determines that the packets are to be transmitted to the switching device 1 via a communication line connected to the subject device, the packets received by the wireless transmitting/receiving circuit 106 and the packets transferred from the relay apparatus 100-2 are transmitted to the switching device 1.
By this means, the relay apparatus 100-1 efficiently multiplexes the communication lines using the normally functioning communication lines. Relay apparatuses 100-2, 200-1, and 200-2 also conduct the same processing as relay apparatus 100-1.

Next, the operations of relay apparatus 100-1 are described.
In the communications system of the present embodiment, prior to conducting communication, it is necessary to preset information which indicates the control relationships of the relay apparatuses that are stack-connected. Specifically, the administrator manipulates the input device connected to relay apparatuses 100-1 and 100-2 to set one of the relay apparatuses 100-1 and 100-2 to a master mode that controls the processes of the other relay apparatus, and to set the other to a slave mode that is controlled by the relay apparatus of the master mode. Relay apparatuses 200-1 and 200-2 are also similarly set. The information pertaining to the established control relationships is stored in the internal memory of the LACP control circuit 104 of the relay apparatus.

First, a description is given of the operations of relay apparatus 100-1 when the switching device 1 transmits an LACP packet.

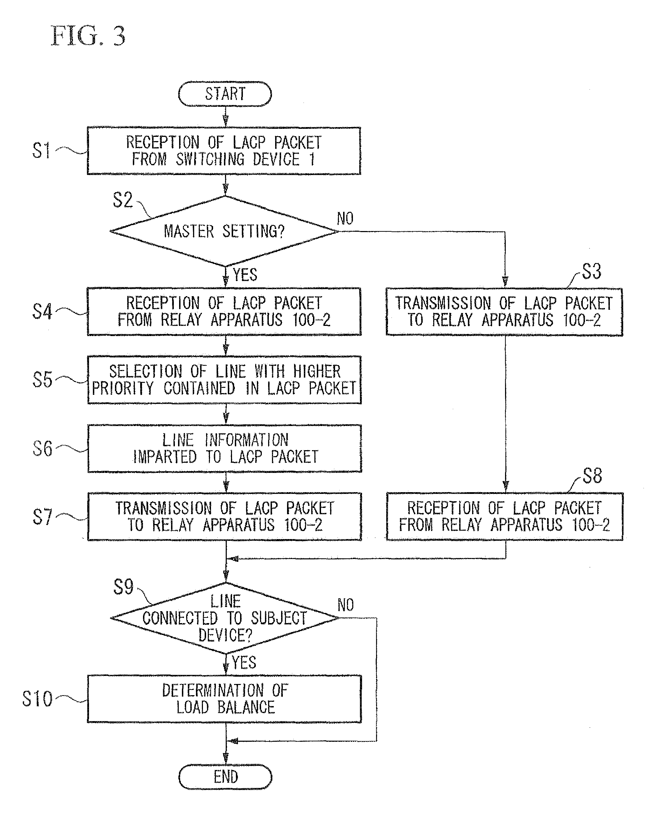

Fig. 3 is first flowchart which shows operations of a relay apparatus.
The switching device 1 regularly transmits (for example, every 30 seconds) LACP packets to relay apparatuses 100-1 and 100-2. When the switching device I transmits an LACP packet, the wired transmitting/receiving circuit 101 of relay apparatus 100-1 receives the pertinent LACP packet (step S1). Subsequently, the wired transmitting/receiving circuit 101 outputs the received LACP packet to the packet filter circuit 102. The packet filter circuit 102 outputs the pertinent LACP packet to the LACP control circuit 104 and the stack transmission buffer control circuit 107.

When the LACP control circuit 104 inputs the LACP packet from the packet filter circuit 102, the information pertaining to the control relationships of the stack connections stored in the internal memory is referenced, and it is discriminated whether or not the subject device is set to the master mode (step S2).
In the case where the LACP control circuit 104 discriminates that the subject device is set to the slave mode (step S2: NO), the stack transmission buffer control circuit 107 records the LACP packet inputted from the packet filter circuit 102 in a stack transmission buffer provided in the subject circuit, and awaits the transmission turn of the pertinent LACP packet. The stack transmitting/receiving circuit 108 transmits the information recorded in the stack transmission buffer in the recorded sequence. When the transmission sequence of the pertinent LACP packet is reached, the stack transmission buffer control circuit 107 extracts the LACP packet from the stack transmission buffer, and transmits it to relay apparatus 100-2 via the stack transmitting/receiving circuit 108 (step S3).

On the other hand, in the case where the LACP control circuit 104 discriminates that the subject device is set to the master mode (step S2: YES), as relay apparatus 100-2 is set to the slave mode, relay apparatus 100-2 transmits the LACP packet received from the switching device 1 to relay apparatus 100-1 by the above-described processing of step S3. When relay apparatus 100-2 transmits the LACP packet, the stack transmitting/receiving circuit 108 of relay apparatus 100-1 receives the pertinent LACP packet (step S4).

Next, the stack transmitting/receiving circuit 108 outputs the received LACP packet to the packet filter circuit 109, and the packet filter circuit 109 outputs the pertinent LACP packet to the LACP control circuit 104. The LACP control circuit 104 then compares the priority information of the LACP packet that the subject device received from the switching device 1 in step S1 and the priority information of the LACP packet received from relay apparatus 100-2 in step S4. The LACP control circuit 104 then selects a line connected to the relay apparatus with the higher LACP packet priority as the line on which to conduct communications with the switching device 1 (step S5).

Next, based on the selection results of step S5, the LACP control circuit 104 generates a line selection signal indicating the line on which communications with the switching device 1 are to be conducted, and outputs it to the wireless transmission buffer control circuit 103, the load balance control circuit 105, the stack transmission buffer control circuit 107, and the wired transmission buffer control circuit 110. The stack transmission buffer control circuit 107 then imparts line information which identifies the line shown by the line selection signal inputted from the LACP control circuit 104 to the LACP packet received in step S1 (step S6).
Next, the stack transmission buffer control circuit 107 records the LACP packet that is imparted with line information in a stack transmission buffer provided in the subject circuit, and awaits the transmission turn of the pertinent LACP packet. When the transmission turn of the pertinent LACP packet arrives, the stack transmission buffer control circuit 107 extracts the LACP packet from the stack transmission buffer, and transmits it to relay apparatus 100-2 via the stack transmitting/receiving circuit 108 (step S7).

On the other hand, in the case where it is discriminated in step S2 that the subject device is set to the slave mode, and where the LACP packet is transmitted to relay apparatus 100-2 in step S3, as relay apparatus 100-2 is set to the master mode, relay apparatus 100-2 transmits the LACP packet including the line information to relay apparatus 100-1 by the above-described processing of steps S4-S7. When relay apparatus 100-2 transmits the LACP packet, the stack transmitting/receiving circuit 108 of relay apparatus 100-1 receives the pertinent LACP packet (step S8). Next, the stack transmitting/receiving circuit 108 outputs the received LACP packet to the packet filter circuit 109, and the packet filter circuit 109 outputs the pertinent LACP packet to the LACP control circuit 104. The LACP control circuit 104 then generates a line selection signal indicating the line information contained in the received LACP packet, and outputs it to the wireless transmission buffer control circuit 103 and the load balance control circuit 105.

In the case where the stack transmission buffer control circuit 107 transmits the LACP packet to relay apparatus 100-2 in step S7, or in the case where the stack transmitting/receiving circuit 108 receives the LACP packet from relay apparatus 100-2 in step S8, the load balance control circuit 105 discriminates whether or not the line selection signal inputted from the LACP control circuit 104 selects a line connected to the subject device (step S9).
In the case where the load balance control circuit 105 discriminates that the line selection signal indicates a line connected to relay apparatus 100-2 (step S9: NO), relay apparatus 100-1 terminates processing based on reception of an LACP packet.

On the other hand, in the case where the load balance control circuit 105 discriminates that the line selection signal indicates a line connected to the subject device (step S9: YES), the load balance which is the ratio of the payload packets distributed to the subject device and relay apparatus 100-2 is determined, and a load balance signal indicating the pertinent load balance is outputted to the wireless transmission buffer control circuit 103 (step S 10). Here, the load balance control circuit 105 may determine, for example, the ratio of the subject device and relay apparatus 100-2 to be 1:1 as the load balance, or it may determine the ratio based on the condition of the wireless communication environment of the subject device and relay apparatus 100-2.
When the load balance control circuit 105 outputs a load balance signal, relay apparatus 100-1 terminates processing based on reception of an LACP packet.
By means of this processing, relay apparatus 100-1 determines the line on which communications with switching device 1 are conducted, and the ratio of the payload packets distributed to the subject device and relay apparatus 100-2

Next, a description is given of the operations of relay apparatus 100-1 when the switching device 1 transmits a payload packet addressed to the switching device 2.

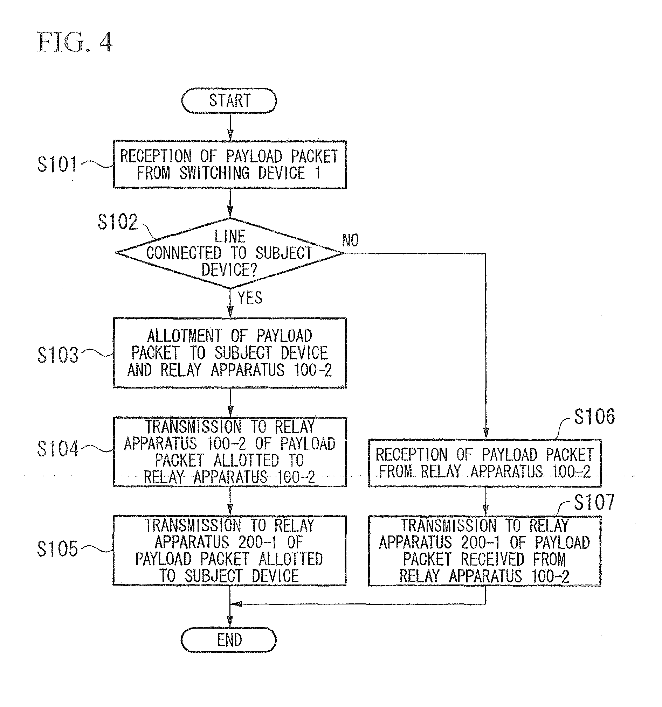

Fig. 4 is a second flowchart which shows operations of a relay apparatus.
When the switching device 1 transmits a payload packet addressed to the switching device 2, the wired transmitting/receiving circuit 101 of relay apparatus 100-1 receives the pertinent payload packet (step S101). Next, the wired transmitting/receiving circuit 101 outputs the received payload packet to the packet filter circuit 102, and the packet filter circuit 102 outputs the pertinent payload packet to the wireless transmission buffer control circuit 103.

Next, the wireless transmission buffer control circuit 103 discriminates whether or not the line selection signal inputted from the LACP control circuit 104 in the above-described step S5 or step S8 indicates selection of a line connected to the subject device (step S102). In the case where the wireless transmission buffer control circuit 103 discriminates that the line selection signal has selected a line that is connected to the subject device (step S102: YES), the payload packet inputted from the packet filter circuit 102 is distributed to the subject device and relay apparatus 100-2 based on the ratio indicated by the load balance signal inputted from the load balance control circuit 105 in the above-described step S10 (step S103).

Next, the wireless transmission buffer control circuit 103 outputs the payload packet allotted to relay apparatus 100-2 to the stack transmission buffer control circuit 107. Subsequently, the stack transmission buffer control circuit 107 line the payload packet inputted from the wireless transmission buffer control circuit 103 in a stack transmission buffer provided in the subject circuit, and awaits the transmission turn of the pertinent payload packet. When the transmission turn of the pertinent payload packet arrives, the stack transmission buffer control circuit 107 extracts the payload packet from the stack transmission buffer, and transmits it to relay apparatus 100-2 via the stack transmitting/receiving circuit 108 (step S104).

Next, the wireless transmission buffer control circuit 103 records the payload packet allotted to the subject device in a wireless transmission buffer provided in the subject circuit, and awaits the transmission turn of the pertinent payload packet. When the transmission turn of the pertinent payload packet arrives, the wireless transmission buffer control circuit 103 extracts the payload packet from the wireless transmission buffer, and wirelessly transmits it to relay apparatus 200-1 via the wireless transmitting/receiving circuit 106 (step S105).
When the wireless transmission/receiving circuit 106 wirelessly transmits the payload packet, relay apparatus 100-1 terminates processing based on reception of a payload packet addressed to the switching device 2.

On the other hand, in the case where the wireless transmission buffer control circuit 103 discriminates that the line selection signal indicates selection of a line connected to relay apparatus 100-2 (step S102: YES), relay apparatus 100-2 transmits the payload packet addressed to the switching device 2 to relay apparatus 100-1 by the above-described processing of steps S103-S105. When relay apparatus 100-2 transmits the payload packet, the stack transmitting/receiving circuit 108 of relay apparatus 100-1 receives the pertinent payload packet (step S106). In the case where it is discriminated that the line selection signal indicates selection of a line connected to relay apparatus 100-2, the wireless transmission buffer control circuit 103 discards the payload packet received from the switching device 1 in step S101. This is because relay apparatus 100-1 and relay apparatus 100-2 have received the same packets from the switching device 1, and because the payload packet received in step S101 has become unnecessary due to transmission to relay apparatus 100-1 of the portion transmitted by relay apparatus 100-1 from among the pertinent packets.

Next, the stack transmitting/receiving circuit 108 outputs the received payload packet addressed to the switching device 2 to the packet filter circuit 109, and the packet filter circuit 109 outputs the pertinent payload packet to the wireless transmission buffer control circuit 103. The wireless transmission buffer control circuit 103 records the payload packet inputted from the packet filter circuit 109 in a wireless transmission buffer provided in the subject circuit, and awaits the transmission turn of the pertinent payload packet. When the transmission turn of the pertinent payload packet arrives, the wireless transmission buffer control circuit 103 extracts the payload packet from the wireless transmission buffer, and wirelessly transmits it to relay apparatus 200-1 via the wireless transmitting/receiving circuit 106 (step S107).
When the wireless transmitting/receiving circuit 106 wirelessly transmits the payload packet, relay apparatus 100-1 terminates processing based on reception of a payload packet addressed to the switching device 2.

Next, a description is given of operations of relay apparatus 100-1 when relay apparatus 200-1 transmits a payload packet addressed to the switching device 1.

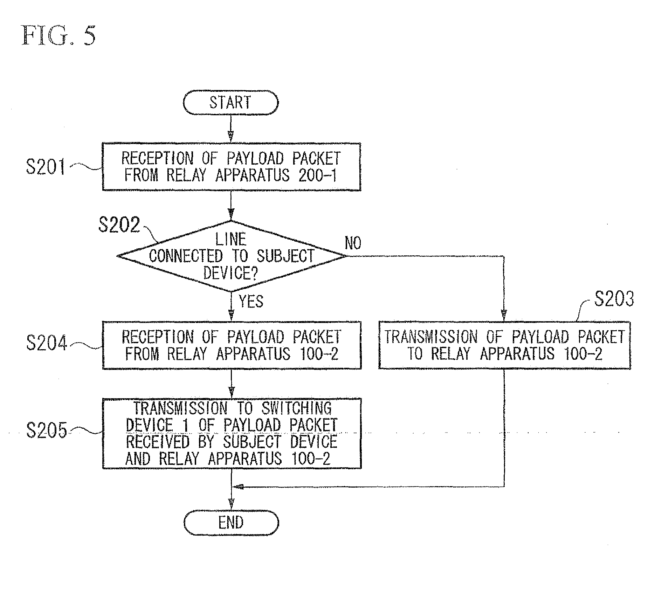

Fig. 5 is a third flowchart which shows the operations of the relay apparatus.
When relay apparatus 200-1 transmits a payload packet addressed to the switching device 1 the wireless transmitting/receiving circuit 106 of relay apparatus 100-1 receives the pertinent payload packet (step S201). Subsequently, the wireless transmitting/receiving circuit 106 outputs the received payload packet to the stack transmission buffer control circuit 107 and the wired transmission buffer control circuit 110.

Next, the wireless transmission buffer control circuit 110 discriminates whether or not the line selection signal inputted from the LACP control circuit 104 in the above-described step S5 or step S8 indicates selection of a line connected to the subject device (step S202). In the case where the wired transmission buffer control circuit 110 discriminates that the line selection signal indicates selection of the line connected to relay apparatus 100-2 (step S202: NO), the payload packet inputted from the wireless transmitting/receiving circuit 106 is discarded. The stack transmission buffer control circuit 107 then records the payload packet inputted from the wireless transmitting/receiving circuit 106 in a stack transmission buffer provided in the subject circuit, and awaits the transmission turn of the pertinent payload packet. When the transmission turn of the pertinent payload packet arrives, the stack transmission buffer control circuit 107 extracts the payload packet from the stack transmission buffer, and transmits it to relay apparatus 100-2 via the stack transmitting/receiving circuit 108 (step S203).
When the stack transmitting/receiving circuit 108 transmits the payload packet, relay apparatus 100-1 terminates processing based on reception of a payload packet addressed to the switching device 1.

On the other hand, in the case where the wireless transmission buffer control circuit 110 discriminates that the line selection signal indicates selection of a line connected to the subject device (step S202: YES), relay apparatus 100-2 transmits the payload packet addressed to the switching device 1 by the above-described processing of step S203. When relay apparatus 100-2 transmits the payload packet, the stack transmitting/receiving circuit 108 of relay apparatus 100-1 transmits the pertinent payload packet (step S204).

Next, the stack transmitting/receiving circuit 108 outputs the received payload packet addressed to the stacking device 1 to the packet filter 109, and the packet filter 109 outputs the pertinent payload packet to the wired transmission buffer control circuit 110. The wired transmission buffer control circuit 110 records the payload packet inputted from the wireless transmitting/receiving circuit 106 and the payload packet inputted from the packet filter circuit 109 to a wired transmission buffer provided in the subject circuit, and awaits the transmission turn of the pertinent payload packet. When the transmission turn of the pertinent payload packet arrives, the wired transmission buffer control circuit 110 extracts the payload packet from the wired transmission buffer, and transmits it to the switching device 1 via the wired transmitting/receiving circuit 101 (step S205).
When the wired transmitting/receiving circuit 101 transmits the payload packet, relay apparatus 100-1 terminates processing based on reception of a payload packet addressed to the switching device 1.

Thus, according to the present embodiment, relay apparatus 100-1 or relay apparatus 100-2 distributes a packet received from the switching device 1 to relay apparatus 100-1 and relay apparatus 100-2. Relay apparatus 100-1 (relay apparatus 100-2) transmits the distributed packet to relay apparatus 200-1 (relay apparatus 200-2). Next, relay apparatus 200-1 (relay apparatus 200-2) transfers the packet received from relay apparatus 100-1 (100-2) to either relay apparatus 200-1 or 200-2, and the pertinent relay apparatus transmits the transferred packet to the switching device 2. By this means, even if a malfunction occurs in any of the communication lines, the packet can be shared by all relay apparatuses. Consequently, the relay apparatuses can efficiently multiplex the communication lines using the normally function communication lines.

### Second embodiment

A second embodiment is described in detail below with reference to drawings.

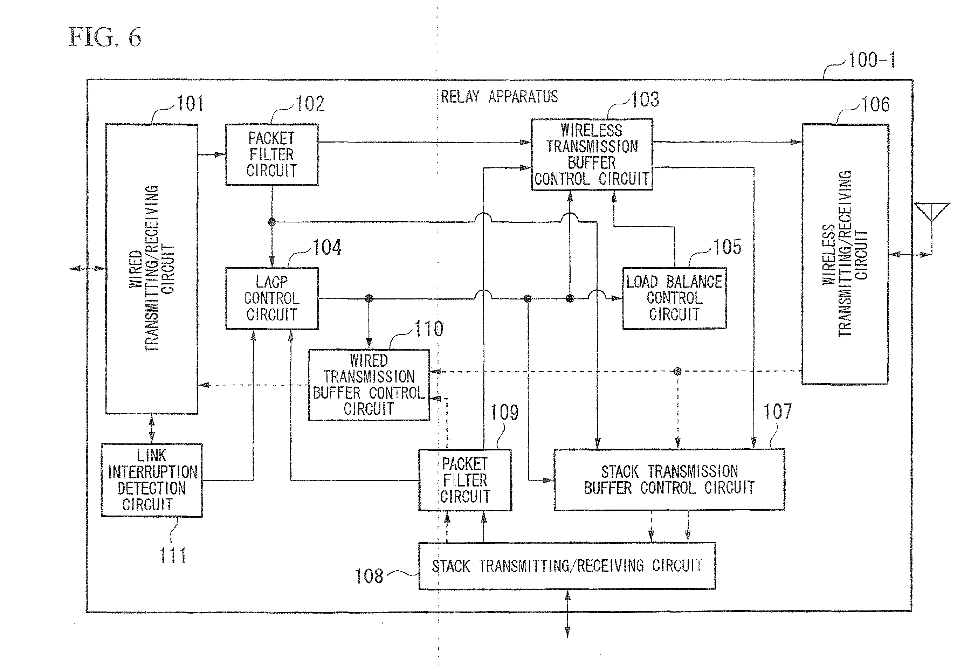

Fig. 6 is a schematic block diagram which shows the configuration of a relay apparatus of the second embodiment.
Relay apparatuses 100-1, 100-2, 200-1, and 200-2 of the present embodiment add a link interruption detection circuit 111 to the configuration of relay apparatus 100-1 of the first embodiment, and the operation of their LACP control circuits 104 is different.

The link interruption detection circuit I I monitors the link status of the line connected to the switching device 1, and outputs a link interruption detection signal to the LACP control circuit 104 when it discriminates that a malfunction has occurred in the pertinent line. Link status monitoring may, for example, be conducted by having the link interruption detection circuit 111 discriminate whether or not the wired transmitting/receiving circuit 101 is regularly receiving LACP packets, or by having the link interruption detection circuit 111 regularly transmit packets to the switching device 1 via the wired transmitting/receiving circuit 101, and discriminate whether there is a response.

The LACP control circuit 104 discriminates the line status of the lines connecting the switching device 1 and the respective relay apparatuses 100-1 and 100-2 based on LACP packets inputted from the packet filter circuits 102 and 109 and link interruption detection signals outputted by the link interruption detection circuit 111.
Specifically, in the processing of step S5 described in the first embodiment, the LACP control circuit 104 first discriminates whether or not the link interruption detection circuit 111 has outputted a link interruption detection signal with respect to either relay apparatus 100-1 or 100-2. In the case where the LACP control circuit 104 discriminates that the link interruption detection circuit 111 has outputted a link interruption detection signal with respect to either relay apparatus 100-1 or 100-2, the line connected to the relay apparatus for which a link interruption detection signal has not been outputted is selected as the line on which to conduct communications with the switching device 1. On the other hand, in the case where the LACP control circuit 104 discriminates that the link interruption detection circuit 111 has not outputted a link interruption detection signal with respect to either relay apparatus 100-1 or 100-2, the LACP control circuit 104 compares the priority information of the LACP packet received by the subject device and the priority information of the LACP packet received by relay apparatus 100-2. The LACP control circuit 104 then selects a line connected to the relay apparatus with the higher priority LACP packet as the line on which to conduct communications with the switching device 1.
Thus, according to the relay apparatuses of the second embodiment, payload packets transmitted by the switching device 1 can be more reliably received, because a line on which link interruption has not occurred can be selected.

### Third embodiment

A third embodiment is described in detail below with reference to drawings.

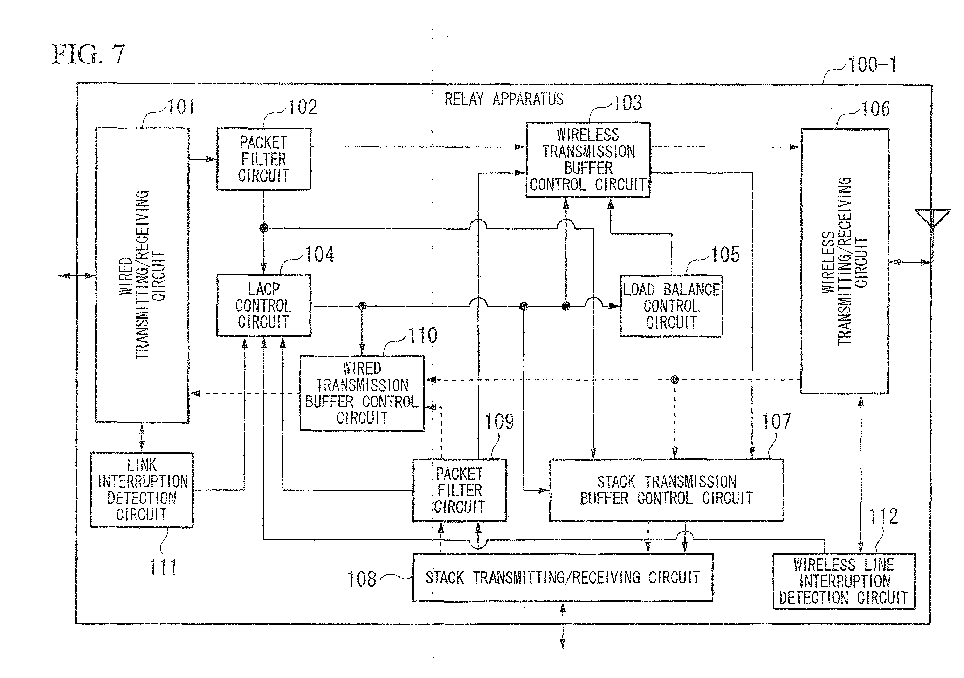

Fig. 7 is a schematic block diagram which shows the configuration of a relay apparatus of the third embodiment.
Relay apparatuses 100-1, 100-2, 200-1, and 200-2 of the present embodiment add a wireless line interruption detection circuit 112 to the configuration of relay apparatus 100-1 of the second embodiment, and the operations of their LACP control circuits 104 and load balance control circuits 105 are different.

The wireless line interruption detection circuit 112 monitors the wireless condition of the wireless lines connected to relay apparatus 200-1, and outputs a wireless line interruption detection signal to the LACP control circuit 104 when it is discriminated that a malfunction has occurred in the pertinent wireless line. Monitoring of the wireless condition is conducted, for example, by having the wireless line interruption detection circuit 112 read out overhead information used in wireless synchronization by the wireless transmitting/receiving circuit 106, and discriminate whether or not reading of the pertinent overhead can be conducted.

Based on a wireless line interruption detection signal outputted by the wireless line interruption detection circuit 112, the LACP control circuit 104 imparts information indicating the existence or non-existence of a wireless line malfunction to the LACP packet inputted from the packet filter circuit 102, and outputs the pertinent LACP packet to the load balance control circuit 105 and the stack transmission buffer control circuit 107.
The load balance control circuit 105 inputs a circuit selection signal from the LACP control circuit 104 and the LACP packet containing information indicating the existence or non-existence of a wireless line malfunction, and generates a load balance signal based on the circuit selection signal and the LACP packet.

Specifically, in the processing of step S6 described in the first embodiment, the LACP control circuit 104 imparts line information and information indicating the existence or non-existence of wireless line malfunctions to the LACP packet. In the processing of step S10, the load balance control circuit 105 then discriminates whether or not there is a wireless line malfunction with respect to either relay apparatus 100-1 or relay apparatus 100-2 based on the information contained in the LACP packet. In the case where the load balance control circuit 105 discriminates that there is a wireless line malfunction in either relay apparatus 100-1 or relay apparatus 100-2, all packets are allotted to the relay apparatus which does not have a wireless line malfunction, and a load balance signal is generated which indicates that the packet has not been allotted to the relay apparatus that has the wireless line malfunction. On the other hand, in the case where the load balance control circuit 105 discriminates that there is no wireless line malfunction in either relay apparatus 100-1 or relay apparatus 100-2, load balance is determined by the same method as the second embodiment.
Thus, according to the relay apparatuses of the third embodiment, payload packets transmitted by the switching device 1 can be more reliably transmitted, because wireless transmission of packets can be conducted on a relay apparatus which is free of wireless line malfunctions.

Individual embodiments have been described above in detail with reference to drawings, but specific configurations are not limited to those described above, and a variety of design modifications and the like are possible.
For example, in the foregoing embodiments, the case where the relay apparatuses are capable of wireless transmission/reception is described for purposes of exemplification, but one is not limited thereto, and the same effects can be obtained, for example, even when relay apparatuses 100-1 and 100-2 do not have a wireless reception function, and relay apparatuses 200-1 and 200-2 do not have a wireless transmission function.

In the foregoing embodiments, the case is described where the switching device 1 is connected to relay apparatuses 100-1 and 100-2, and where switching device 2 is connected to relay apparatuses 200-1 and 200-2, but one is not limited thereto, and it is also acceptable to have switching devices 1 and 2 connected to three or more relay apparatuses.

In the foregoing embodiments, the case is described where relay apparatuses 100-1 and 100-2 respectively conduct wireless communications with the switching device 2 via relay apparatuses 200-1 and 200-2, but one is not limited thereto, and it is also acceptable to conduct wireless communications with a switching device 2 that has multiple wireless transmitting/receiving circuits without interposition of relay apparatuses 200-1 and 200-2. It would also be acceptable to conduct communications with interposition of other relay apparatuses between relay apparatuses 100-1 and 100-2 and relay apparatuses 200-1 and 200-2.

In the foregoing embodiments, the case is described where relay apparatuses 200-1 and 200-2 respectively conduct wireless communications with the switching device 1 via relay apparatuses 100-1 and 100-2, but one is not limited thereto, and it is also acceptable to conduct wireless communications with a switching device 1 that has multiple wireless transmitting/receiving circuits without interposition of relay apparatuses 100-1 and 100-2. It would also be acceptable to conduct communications with interposition of other relay apparatuses between relay apparatuses 200-1 and 200-2 and relay apparatuses 100-1 and 100-2.

In the foregoing embodiments, the case is described where relay apparatus 100-2 and relay apparatus 200-2 are wirelessly connected, but one is not limited thereto, and it is also acceptable to connect these apparatuses by wiring.

The above-described relay apparatuses 100-1, 100-2, 200-1, and 200-2 are internally provided with a computer system. The operations of each of the above-described processing units are stored in a computer-readable recording medium in program format, and the aforementioned processing is conducted by having the computer read and execute this program. Here, a computer-readable recording medium signifies a magnetic disc, optical-magnetic disc, CD-ROM, DVD-ROM, semiconductor memory, or the like. Moreover, it is also acceptable to deliver this computer program to a computer by a communication line, and to have the pertinent program executed by the computer that has received this transmission.

The aforementioned program may also be a program that serves to execute a portion of the above-described functions. Furthermore, the program may also be a so-called differential file (differential program) which is capable of executing the above-described functions in combination with a program already recorded in the computer system.

### INDUSTRIAL APPLICABILITY

The foregoing embodiments may, for example, be applied to a communication system which conducts wireless communications.

### DESCRIPTION OF THE REFERENCE NUMERALS

- 1, 2:: switching device
- 100-1, 100-2, 200-1, 200-2:: relay apparatus
- 101:: wired transmitting/receiving circuit
- 102:: packet filter circuit
- 103:: wireless transmission buffer control circuit
- 104:: LACP control circuit
- 105:: load balance control circuit
- 106:: wireless transmitting/receiving circuit
- 107:: stack transmission buffer control circuit
- 108:: stack transmitting/receiving circuit
- 109:: packet filter circuit
- 110:: wired transmission buffer control circuit
- 111:: link interruption detection circuit
- 112:: wireless line interruption detection circuit

## Claims

1. A relay apparatus which conducts relay between a first communication device and a second communication device, comprising:
a first line determination portion which determines whether to use a line which links the relay apparatus and the first communication device or a line which links another relay apparatus and the first communication device;
a distribution portion which, when a line which links the relay apparatus and the first communication device is determined to be used, distributes packets received by the first communication device to both the relay apparatus and said other relay apparatus and transmits packets received from the first communication device to the second communication device; and
an acquisition portion which, when a line which links said other relay apparatus and the first communication device is determined to be used, receives packets distributed from said other relay apparatus and transmits packets to the second device.

2. A relay apparatus which conducts relay between a first communication device and a second communication device, comprising:
a line determination portion which determines whether to use a line which links the relay apparatus and the first communication device or a line which links another relay apparatus and the first communication device;
a transfer portion which, when a line which links said other relay apparatus and the first communication device is determined to be used, transfers packets received from the second communication device to said other relay apparatus;
and a transmitter which, when a line which links the relay apparatus and the first communication device is determined to be used, transmits both packets received from the second communication device and packets transferred from said other relay apparatus to the first communication device.

3. The relay apparatus according to claim 1, comprising the relay apparatus according to claim 2.

4. The relay apparatus according to claim 1, comprising:
a first malfunction detection portion which discriminates whether or not a malfunction has occurred in a communication line connecting a subject device and the first communication device;
wherein the line determination portion determines a communication line to conduct communications other than communication lines for which occurrence of a malfunction has been discriminated by the first malfunction detection portion.

5. The relay apparatus according to claim 2, comprising:
a first malfunction detection portion which discriminates whether or not a malfunction has occurred in a communication line connecting a subject device and the first communication device;
wherein the line determination portion determines a communication line to conduct communications other than communication lines for which occurrence of a malfunction has been discriminated by the first malfunction detection portion.

6. The relay apparatus according to claim 1, comprising:
a second malfunction detection portion which discriminates whether or not a malfunction has occurred in a communication line connecting the first communication device and the second communication device;
wherein the distributor distributes a packet to a relay apparatus for which the second malfunction detection portion discriminates that a malfunction has not occurred in the second communication line.

7. A relay method for receiving packets from a first communication device, and for transmitting the packets to a second communication device using first and second relay apparatuses, comprising:
a step of receiving a packet from the first communication device;
a step of determining via which communication line, among communication lines connecting the first communication device and the first and second relay apparatuses, to transmit a packet received from the first communication device to the second communication device;
a step of distributing a packet to the first relay apparatus and the second relay apparatus, in the case where the packet received from the first communication device via a communication line connected to the first relay apparatus is to be transmitted to the second communication device;
a step of obtaining a packet by the first relay apparatus distributed from the second relay apparatus, in the case where a packet received from the first communication device via a communication line connected to the second relay apparatus is to be transmitted to the second communication device;
and a step of transmitting a packet distributed to the first relay apparatus or a packet obtained from the second relay apparatus to the second communication device.

8. A computer program stored in a non-transitory computer-readable recording medium of a first relay apparatus, in a relay system which receives packets from a first communication device, and which transmits the packets to a second communication device using first and second relay apparatuses, comprising:
a receiving instruction to receive a packet from the first communication device;
an instruction to determine via which communication line, among communication lines connecting the first communication device and the first and second relay apparatuses, to transmit a packet received from the first communication device to the second communication device;
an instruction to distribute a packet received from the first communication device to the first relay apparatus and the second relay apparatus, in the case where a packet received from the first communication device is to be transmitted to the second communication device via a communication line connected to the first relay apparatus;
an instruction to obtain a packet distributed from the second relay apparatus, in the case where a packet received from the first communication device is to be transmitted to the second communication device via a communication line connected to the second relay apparatus; and
an instruction to transmit a packet distributed from the first relay apparatus or a packet obtained from said second relay apparatus to said second communication device.

9. A relay method for receiving packets from a second communication device, and for transmitting the pertinent packets to a first communication device using first and second relay apparatuses, comprising:
a step of receiving a packet from said second communication device;
a step of determining via which communication line, among communication lines connecting said first communication device and said first and second relay apparatuses, to transmit a packet to the first communication device;
a step of transmitting a packet received from said second communication device to said first relay apparatus and said second relay apparatus, in the case where a packet is to be transmitted to said first communication device via a communication line connected to said second relay apparatus;
and a step of transmitting both a packet received by said first relay apparatus and a packet transferred from said second relay apparatus to said first communication device, in the case where a packet is to be transmitted to said first communication device via a communication line connected to said first relay apparatus.

10. A computer program stored in a non-transitory computer-readable recording medium of a first relay apparatus, in a relay system which receives packets from a second communication device, and which transmits the pertinent packets to a first communication device using first and second relay apparatuses, comprising:
an instruction to receive a packet from said second communication device;
an instruction to determine via which communication line, among communication lines connecting said first communication device and said first and second relay apparatuses, to transmit a packet to said first communication device;
an instruction to transfer a packet received from said first communication device to said second relay apparatus, in the case where a packet is to be transmitted to said first communication device via a communication line connected to the pertinent second relay apparatus; and
an instruction to transmit a packet received by said first relay apparatus and a packet transferred from said second relay apparatus to said first communication device, in the case where a packet is to be transmitted to said first communication device via a communication line connected to said first relay apparatus.

11. A communication system, comprising: first and second communication devices, first and second relay apparatuses connected to said first communication device, and third and fourth relay apparatuses connected to said second communication device; wherein said first to fourth relay apparatuses are the relay apparatus recorded in claim 3.
